# EUROPEAN PATENT APPLICATION

(11) **EP 4 727 068 A1**
(43) Date of publication of application: **15.04.2026**
(21) Application number: 24205911.1
(22) Date of filing: 10.10.2024
(51) Int. Cl.: H04L 25/02, G06F 13/42

(54) **UNIVERSAL INTERFACE**

(71) Applicant: Pepperl+Fuchs SE, 68307 Mannheim (DE)
(72) Inventor: Lohmann, Gerrit, 68307 Mannheim (DE); Grau, Edgar, 68307 Mannheim (DE); Gazzi, Michele, 68307 Mannheim (DE)
(74) Representative: Banse & Steglich Patentanwälte PartmbB

(57) **Abstract**

The present invention relates to A universal interface (10) for receiving or transmitting analog signals and/or digital data in a bus-based communication system (1), comprising:
- a driver unit (11) configured to provide a received voltage signal depending on a received analog current signal and/or on received digital data and for driving an analog output onto the signal/data bus line (4);
- an analog-digital converter (22) configured to sample a received voltage signal provided by the driver unit and to provide a time series of the sampled signal values;
- a digital-analog converter (21) configured to provide an analog signal for driving onto the signal/data bus line (4) by the driver unit;
- an integrated microcontroller (12) comprising
∘ a modem (25), particularly a HART modem, configured to modulate and to provide a frequency modulated signal to code provided digital data and to receive and demodulate a frequency modulated signal to obtain digital data;
∘ a low pass digital filter (23) configured to receive the time series of the sampled signal values and to provide analog values corresponding to an analog signal received;
∘ a bandpass digital filter (24) configured to receive the time series of the sampled signal values and to forward the filtered time series of the sampled signal values to the modem,
∘ a comparator (26) configured to perform a threshold comparison onto the time series of the sampled signal values to generate digital data for further processing in the microcontroller (12).

## Description

### Technical field

The present invention relates to interfaces, particularly interfaces for receiving and transmitting analog, digital and mixed signals and data e.g. according to the HART protocol. The present invention relates to providing a universal interface which allows to receive and transmit data of any type with reduced hardware cost.

### Technical background

Generally, bus-based communication systems, such as a fieldbus system, comprise master units and slave units which are interconnected via one or more signal/data bus lines. The signal/data bus lines are used to transmit data from the master unit to the slave unit and vice versa. Generally, bus-based communication systems have to be as flexible as possible in terms of types of data transmission over the signal/data bus lines.

The signal/data bus lines may be used to transmit analog signals or digital data only. However, there are protocols for transmitting analog signals and digital data simultaneously. One possible protocol is the HART protocol. To provide universal interfaces which are configured to distinguish between the transmitted analog signals or digital data, analog filters need to be provided.

It is an object of the present invention to provide a universal interface for a bus-based communication system which is configured to receive and transmit any of analog signals, digital data and mixed data.

### Summary of the invention

This object has been achieved by the universal interface for a bus-based communication system according to claim 1.

Further embodiments are indicated in the dependent subclaims.

According to a first aspect, a universal interface is provided for receiving or transmitting analog signals and/or digital data in a bus-based communication system, comprising:
- a driver unit configured to provide a received voltage signal depending on a received analog current signal and/or on received digital data and for driving an analog output onto the signal/data bus line;
- an analog-digital converter configured to sample a received voltage signal provided by the driver unit and to provide a time series of the sampled signal values;
- a digital-analog converter configured to provide an analog signal for driving onto the signal/data bus line;
- an integrated microcontroller comprising
   ∘ a modem, particularly a HART modem, configured to modulate and to provide a frequency coded signal and to receive and demodulate a frequency coded signal to obtain digital data;
   ∘ a low pass digital filter configured to receive the time series of the sampled signal values and to provide analog values corresponding to an analog signal received;
   ∘ a bandpass digital filter configured to receive the time series of the sampled signal values and to forward the filtered time series of the sampled signal values to the modem,
   ∘ a comparator configured to perform a threshold comparison onto the time series of the sampled signal values to generate digital data for further processing in the microcontroller.

It may be provided that the analog-digital converter is separate from the microcontroller or is integrated in the microcontroller.

Furthermore, the digital-analog converter may be provided separate from the microcontroller or is integrated in the microcontroller.

According to the present invention, a microcontroller is used to basically provide important functionalities required for the universal interface. The microcontroller may comprise a digital-to-analog converter and an analog-to-digital converter which are used/configured to receive from and to transmit data onto a signal/data bus line. The signal on the signal/data bus line is treated as an analog signal and sampled with a sampling frequency and digitally filtered thereafter.

The universal interface is configured to be connected to any kind of bus line. That includes signal bus line for transmitting analog signals and digital bus lines for transmitting digital signals. Depending on the kind of signal/data bus line the universal interface can be operated to receive, forward, send and/or interpret the signals/data.

A first digital filter unit is provided as a low-pass filter to provide the sampling values of an analog signal at the input of the analog-digital converter. The low-pass filter may have a cutoff frequency as low as 50 to 1,000 Hz.

Furthermore, a second digital filter unit may be parallelly provided as a bandpass filter which may allow passing through a frequency signal of 1.2 kHz and 2.2 kHz according to the HART protocol.

The filtered signals are treated as analog signals. Both filters may be implemented as software-based digital filters instead of hardware-based analog filters as it is common for universal interfaces according to the prior art. As a digital-to-analog converter and an analog-to-digital converter of a microcontroller are used the digital filters may be also implemented in the same microcontroller.

Furthermore, a software-based comparator can be provided to implement a threshold comparison to transform the time series of analog-digital converted sampled signal as digital data. The comparator is preferably provided with a hysteresis to debounce the time series of the analog-digital converted sampled signal.

The filtered signal on the output of the second digital filter is supplied to a modem in receive mode to provide the representation of the digital signal included in the received data signal by performing a frequency demodulation.

Concerning the transmission of the data, the digital-analog converter can directly output a digital signal as an alteration between a first and a second analog amplitude voltage level or an analog signal and is also capable to transform the mixed digital and analog signals of the output of the modem in a send mode into a corresponding analog value.

One main aspect of the universal interface is that the electrical signals which can be of any type, such as digital signals, analog signals or frequency modulated signals overlaying an analog signal (mixed analog and digital signal), are received by the analog-digital converter so that even digital signals are sampled and treated as analog signals. In the microcontroller the time series of digitalized data is converted into the received digital data by the use of the comparator. This allows to use the same input signal path for any of the signal types

Furthermore, the digital data and/ or digitalized analog data received by the microcontroller can be used for further processing in the microcontroller, can be transmitted to a further processing unit, or can be transmitted via a further backbone data bus, such as a fieldbus.

It may be provided that the driver unit comprises a serial connection of a semiconductor device and particularly a resistor to be coupled between a signal/data bus line of the bus-based communication system and a reference potential, wherein a control terminal of the semiconductor device is coupled with an output of the digital-analog-converter, and an intermediate node of the serial connection is coupled with an input of the analog-digital converter.

Furthermore, the control terminal of the semiconductor device may be coupled with the output of the digital-analog-converter e.g. via a gain stage, and/or wherein the intermediate node of the serial connection is coupled with the input of the analog-digital converter e.g. via a gain stage and/or a RC filter.

Particularly, the interface may be configured to control the semiconductor device for becoming conductive.

An IO driver unit may be provided to couple the microcontroller with the signal/data bus line which includes a first driver unit to couple the output of the digital-analog converter of the microcontroller with the input of a semiconductor switch such as e.g. a MOSFET transistor. The MOSFET transistor may be in line with a resistor.

The intermediate node between the semiconductor switch and the resistor is coupled via a second driver unit and an RC circuit with the input of the analog-digital converter of the microcontroller.

For receiving an analog signal which is transmitted via a standard current signal with current values between 4 mA and 20 mA, the digital-analog converter is controlled to close (make conductive) the semiconductor switch so that the current flows through the resistor so that a voltage drop depending on the transmitted current on the signal/data bus line can be measured by the analog-digital converter. The same effect is obtained when a digital voltage is driven onto the signal data bus line when the semiconductor switch is variably controlled to set a predetermined resistance (or conductivity)

When a signal shall be sent through the signal/data bus line, the digital-analog-converter controls the semiconductor switch as described above.

The implementation of the digital filters and the comparator can be made in software so that the hardware costs and complexity of PCB design compared to a discrete implementation can be efficiently reduced. Furthermore, all kinds of signals can be transmitted and received via the signal/data bus lines.

The output of the comparator may be further coupled with a counter or a frequency detector to also provide a counter value and a frequency value in case the signal/data bus line provides a periodic clock signal or the like.

According to an embodiment, the digital-analog converter may comprise a PWM unit to provide a PWM modulated signal as the analog signal for driving onto the signal/data bus line.

### Brief description of the drawings

Embodiments of the present invention are described in detail in conjunction with the accompanying drawings in which:
- Figure 1: a schematic block diagram to illustrate a fieldbus system with a master unit and numerous slave units; and
- Figure 2: schematically shows a functional block diagram of a universal interface with software-implemented functions integrated in the microcontroller.
- Figure 3: schematically shows a functional block diagram of a universal interface with software-implemented functions integrated in the microcontroller according to a further embodiment.

### Description of embodiments

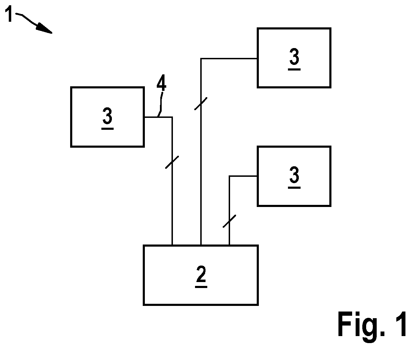

Fig. 1 schematically shows a bus-based communication system 1, such as a fieldbus system, with a master unit 2 and one or more slave units 3, each being implemented as a sensor actuator or the like. The master unit 2 is configured to communicate with the slave units 3 via one or more signal/data bus lines 4. The communication may include the transmission of analog signals between the slave unit 3 and the master unit 2, the transmission of a digital signal from the master unit 2 to the slave unit 3 or reception of a digital signal from the slave unit 3 in the master unit 2 via one or more of the signal/data bus lines 4 of the bus-based communication system 1.

Data and signals can be transmitted and received by the master unit 2 wherein the data include digital data, analog signals, preferably using the 4 mA to 20 mA coding for analog values, a digital signal transmitted via frequency shift coding according to the HART protocol overlaying an analog signal in the range of 4 - 20 mA. The type of data/signals used to communicate between the master unit 2 and the slave unit 3 mainly depends on the configuration of the slave unit 3. To enable that different types of slave units 3 may be connected via the signal/data bus lines 4 and to allow an appropriate communication with the master unit 2, a universal interface has to be provided in the master unit 2.

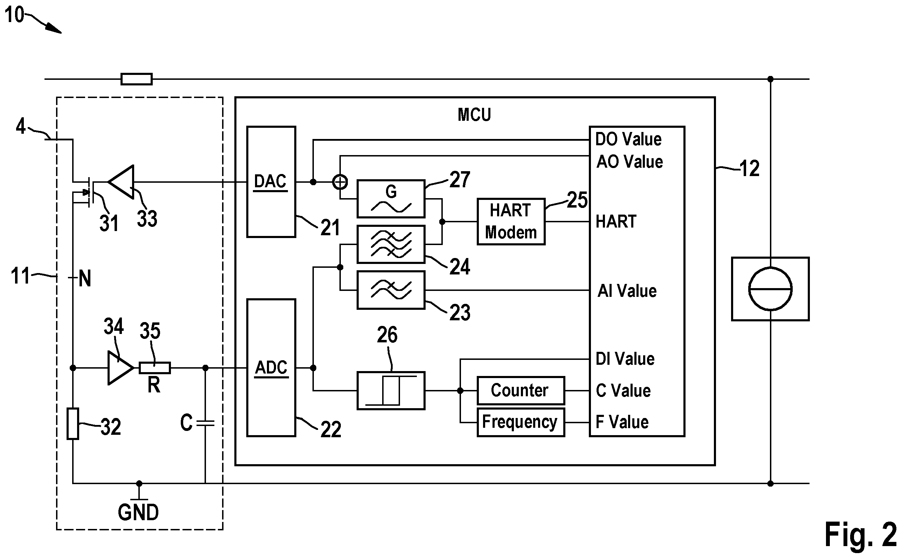

Fig. 2 schematically shows the schematic of a universal interface 10 which can be applied in the master unit 2 and in the slave units 3 of the bus-based communication system 1 including an I/O driver unit 11 and a microcontroller 12. The microcontroller 12 has a digital-analog converter 21 and an analog-digital converter 22 which are controlled by means of functional blocks which may be implemented by a software algorithm or the like.

In an alternative embodiment the digital-analog converter 21 and/or the analog-digital converter 22 can be provided external from the microcontroller 12 to provide or to receive digital data from the microcontroller 12 in the same manner as the microcontroller-internal digital-analog converter 21 and/or the analog-digital converter 22.

The driver unit 11 is connected with the output of the digital-analog converter 21 of the microcontroller 20 and with the input of the analog-digital converter 22. The driver unit 11 may include a series connection of a controllable semiconductor device 31 such as a MOSFET and a resistor 32 being connected between the signal/data bus line 4 and a ground or reference potential GND.

The control terminal of the semiconductor device 31 is driven by the output of a first driver 33, the input of which is connected to the output of the digital-analog converter 21. Thereby, a voltage at the output of the digital-analog converter 21 is amplified by a first gain stage 33 or amplifier adapted to control the semiconductor device 31 so that its conductivity can be variably set, i.e. to set more than two conductivities.

The intermediate node N between the semiconductor device 31 and the resistor 32 is connected via a second gain stage 34 and an RC block 35 with the input of the analog-digital converter 22 so that a current signal obtained via the signal/data bus line 4 as an input of the driver unit 11 is transformed to a corresponding voltage which is amplified in the second gain stage 34 and filtered in the RC filter 35 to eliminate high-frequency signals. Thereby, the input signal of the driver unit 11 is coupled onto the input of the analog-digital converter 22 and can be sampled thereby.

The microcontroller 12 may be a standard microcontroller and configured to sample a received input signal with the analog-digital converter 22 by means of a sampling frequency which may be in a range of between 10 and 1200 kHz.

The input signal is so digitalized and applied to a first low-pass (first) digital filter 23 and a bandpass (second) digital filter 24. The low-pass filter 23 filters the analog value of the input current in a digital format and provides a time series signal of the analog values of the analog signal.

The bandpass digital filter 24 allows to remove the portion of the analog signal from the input signal so that merely the HART-coded part of digital data overlaying potentially overlaying the analog signal is provided to a HART modem 25. The configuration of the HART modem 25 is well known in the art and further described herein. The HART modem 25 decodes the frequency shift coded portions of the digital data and associates them to logical values of "0" or "1".

Furthermore, a decoding comparison unit or comparator 26 may be provided to reconstruct a amplitude modulated digital signal on the signal/data bus line 4 from the analog-to-digital converted (digital) signal. The comparison unit or comparator 26 may basically provide a threshold voltage level to discriminate the sampled digital data signal into "0" and "1" values. The comparison unit or comparator 26 may be formed as a Schmitt-trigger or the like to also provide debouncing.

For transmitting data onto the signal/data bus line 4, a digital or analog value can be simply converted by means of the digital analog converter 21 and used to control the semiconductor device 31. The digital value of numerous bits can so be serially sent via the signal/data bus line 4.

In case a digital signal with a sequence of data bits shall be transmitted together with an analog value, the HART protocol may be used which modulates, e.g. by means of a modulator 27, a frequency shift keying digital signal onto the analog signal to be transmitted so that blocks of 1.2 kHz or 2.2 kHz are added corresponding to the bit value to be transmitted.

The comparator unit 26 can be further connected with a counter 28 and a frequency detector 29 to also provide a counter value or a frequency value if the signal on the signal/data bus line 4 is a clock signal or a counter signal.

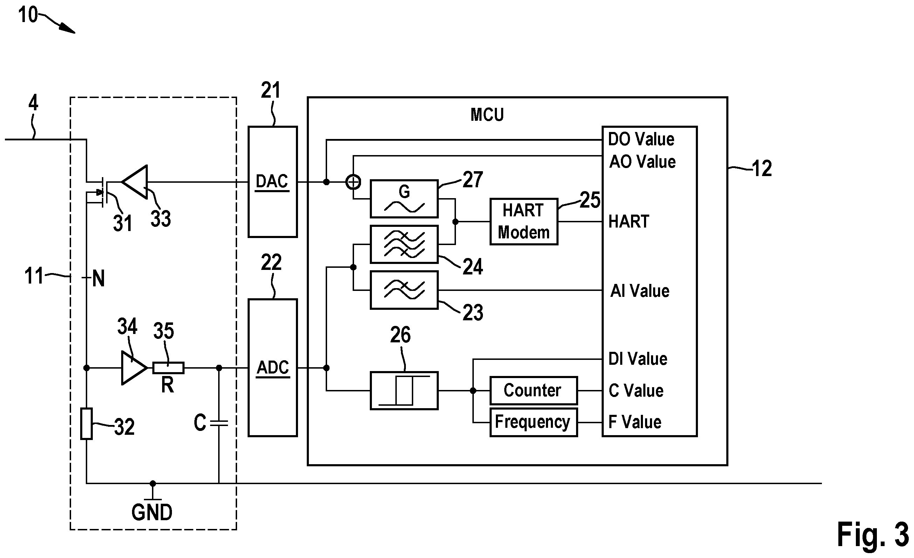

According to a further embodiment which is illustrated in Figure 3, the digital-analog-converter 21' may be provided separate from the microcontroller 12 and/or the analog-digital converter 22' may be provided separate from the microcontroller 12. This allows to be independent from the specifications of the microcontroller 12. So, the voltage or sampling resolution of the analog- digital converter 22' can be freely chosen.

Furthermore, the digital-analog-converter 21, no matter if implemented internal of the microcontroller 12 or external thereof, can be provided as a PWM unit, which outputs the analog signal as a PWM modulated signal which has the effective analog value corresponding to the desired analog voltage.

## Claims

1. A universal interface (10) for receiving or transmitting analog signals and/or digital data in a bus-based communication system (1), comprising:
- a driver unit (11) configured to provide a received voltage signal depending on a received analog current signal and/or on received digital data and for driving an analog output onto the signal/data bus line (4);
- an analog-digital converter (22) configured to sample a received voltage signal provided by the driver unit and to provide a time series of the sampled signal values;
- a digital-analog converter (21) configured to provide an analog signal for driving onto the signal/data bus line (4) by the driver unit;
- an integrated microcontroller (12) comprising
∘ a modem (25), particularly a HART modem, configured to modulate and to provide a frequency modulated signal to code provided digital data and to receive and demodulate a frequency modulated signal to obtain digital data;
∘ a low pass digital filter (23) configured to receive the time series of the sampled signal values and to provide analog values corresponding to an analog signal received;
∘ a bandpass digital filter (24) configured to receive the time series of the sampled signal values and to forward the filtered time series of the sampled signal values to the modem,
∘ a comparator (26) configured to perform a threshold comparison onto the time series of the sampled signal values to generate digital data for further processing in the microcontroller (12).

2. The universal interface (10) according to claim 1, wherein the driver unit (11) comprises a serial connection of a semiconductor device (31) and particularly a resistor (32) to be coupled between the signal/data bus line (4) of the bus-based communication system and a reference potential, wherein a control terminal of the semiconductor device (31) is coupled with an output of the digital-analog-converter (21), and an intermediate node of the serial connection is coupled with an input of the analog-digital converter (22).

3. The universal interface (10) according to claim 2, wherein the control terminal of the semiconductor device (31) is coupled with the output of the digital-analog-converter (21) via a first gain stage (33), and/or wherein the intermediate node of the serial connection is coupled with the input of the analog-digital converter (22) via a second gain stage (34) and/or a RC filter (35).

4. The universal interface (10) according to claim 3, wherein the interface (10) is configured to control the semiconductor device (31) to become conductive.

5. The universal interface (10) according to any of the claims 1 to 4, wherein a counter (28) and/or a frequency detector (29) is coupled with the comparator (26) to provide information about a clock or counter signal on the signal/data bus line (4).

6. The universal interface (10) according to any of the claims 1 to 5, wherein the comparator (26) comprises a hysteresis.

7. The universal interface (10) according to any of the claims 1 to 6, wherein the analog-digital converter (22) is provided separate from the microcontroller (12) or is integrated in the microcontroller (12).

8. The universal interface (10) according to any of the claims 1 to 7, wherein the digital-analog converter (21) is provided separate from the microcontroller (12) or is integrated in the microcontroller (12).

9. The universal interface (10) according to claim 8, wherein the digital-analog converter (21) comprises a PWM unit to provide a PWM modulated signal as the analog signal for driving onto the signal/data bus line (4).

## Amended claims

### Amended claims in accordance with Rule 137(2) EPC.

1. A universal interface (10) for receiving or transmitting analog signals and/or digital data in a bus-based communication system (1), comprising:
- a driver unit (11) configured to provide a received voltage signal depending on a received analog current signal and/or on received digital data and for driving an analog output onto the signal/data bus line (4);
- an analog-digital converter (22) configured to sample a received voltage signal provided by the driver unit and to provide a time series of the sampled signal values;
- a digital-analog converter (21) configured to provide an analog signal for driving onto the signal/data bus line (4) by the driver unit;
- an integrated microcontroller (12) comprising
∘ a modem (25), particularly a HART modem, configured to modulate and to provide a frequency modulated signal to code provided digital data and to receive and demodulate a frequency modulated signal to obtain digital data;
∘ a low pass digital filter (23) configured to receive the time series of the sampled signal values and to provide analog values corresponding to an analog signal received;
∘ a bandpass digital filter (24) configured to receive the time series of the sampled signal values and to forward the filtered time series of the sampled signal values to the modem,
∘ a comparator (26) configured to perform a threshold comparison onto the time series of the sampled signal values to generate digital data for further processing in the microcontroller (12),
**characterized in that** the driver unit (11) comprises a serial connection of a semiconductor device (31) and particularly a resistor (32) to be coupled between the signal/data bus line (4) of the bus-based communication system and a reference potential, wherein a control terminal of the semiconductor device (31) is coupled with an output of the digital-analog-converter (21), and an intermediate node of the serial connection is coupled with an input of the analog-digital converter (22).

2. The universal interface (10) according to claim 2, wherein the control terminal of the semiconductor device (31) is coupled with the output of the digital-analog-converter (21) via a first gain stage (33), and/or wherein the intermediate node of the serial connection is coupled with the input of the analog-digital converter (22) via a second gain stage (34) and/or a RC filter (35).

3. The universal interface (10) according to claim 1, wherein the interface (10) is configured to control the semiconductor device (31) to become conductive.

4. The universal interface (10) according to any of the claims 1 to 3, wherein a counter (28) and/or a frequency detector (29) is coupled with the comparator (26) to provide information about a clock or counter signal on the signal/data bus line (4).

5. The universal interface (10) according to any of the claims 1 to 4, wherein the comparator (26) comprises a hysteresis.

6. The universal interface (10) according to any of the claims 1 to 5, wherein the analog-digital converter (22) is provided separate from the microcontroller (12) or is integrated in the microcontroller (12).

7. The universal interface (10) according to any of the claims 1 to 6, wherein the digital-analog converter (21) is provided separate from the microcontroller (12) or is integrated in the microcontroller (12).

8. The universal interface (10) according to claim 7, wherein the digital-analog converter (21) comprises a PWM unit to provide a PWM modulated signal as the analog signal for driving onto the signal/data bus line (4).
